# EUROPÄISCHE PATENTANMELDUNG

(11) **EP 3 804 492 A1**
(43) Veröffentlichungstag der Anmeldung: **14.04.2021**
(21) Anmeldenummer: 20200230.9
(22) Anmeldetag: 06.10.2020
(51) Int. Cl.: A01D 34/14, A01D 34/73, A01F 12/40, A01D 90/04, A01F 15/10

(54) **KLINGEN UND MESSER FÜR LANDWIRTSCHAFTLICHE MASCHINEN**

(30) Priorität: 08.10.2019 AT 508522019
(71) Anmelder: Gebrüder Busatis Gesellschaft m.b.H., 3251 Purgstall an der Erlauf (AT)
(72) Erfinder: Lutz, Wolfgang, 3250 Wieselburg (AT)
(74) Vertreter: Puchberger & Partner Patentanwälte

(57) **Zusammenfassung**

Messer und Klinge für landwirtschaftliche Maschinen, insbesondere Mähmesserklinge, Strohhäckslermesser, Maisvorsatzmesser, Futtermischwagenmesser, Ladewagen- und Pressenmesser, welches an einem Klingenblatt (1) zumindest eine von einem Schneidkantenanfang (5) bis zum Schneidkantenende (6) reichende gezahnte Schneidkante (3) aufweist, wobei die Schneidkante (3) gerade oder gebogen ausgebildet ist, und wobei das Klingenblatt (1) einen Befestigungsabschnitt (2) aufweist, dadurch gekennzeichnet, dass die Zahnung der Schneidkante (3) über deren Länge hinsichtlich der Zahnteilung und/oder Zahngeometrie variiert ist.

## Beschreibung

Die Erfindung betrifft Klingen und Messer für landwirtschaftliche Maschinen, insbesondere Mähmesserklinge, Strohhäckslermesser, Maisvorsatzmesser, Futtermischwagenmesser, Ladewagen- und Pressenmesser, welches an einem Klingenblatt zumindest eine von einem Schneidkantenanfang bis zum Schneidkantenende reichende gezahnte Schneidkante aufweist, wobei die Schneidkante gerade oder gebogen ausgebildet ist, und wobei das Klingenblatt einen Befestigungsabschnitt aufweist. Bevorzugt handelt es sich bei diesen Maschinen um Fingerschneidwerke für Mähdrescher oder andere Mähmaschinen, Strohhäcksler für Mähdrescher, Maisvorsätze für selbstfahrende Feldhäcksler, Futtermischwägen und Schneidwerke für Ladewägen und Ballenpressen.

Für alle diese beispielsweise genannten Maschinen werden Messer verwendet, um Schnittgut der verschiedensten Art zu zerkleinern oder abzutrennen. Die Messer und deren Klingen haben die verschiedensten Formen, angepasst an die Maschinenkonstruktion und das zu schneidende Material.

Die EP 1 946 630 B1 zeigt ein Beispiel für eine Messeranordnung, wobei die Mähmesserklingen an einem Mähmesserrücken befestigt sind und quer zur Einschubrichtung des Schnittguts bewegt werden. Derartige Messeranordnungen werden bevorzugt für Mähmaschinen für Gras und Getreide verwendet. Zur Vermeidung von Missverständnissen sei darauf hingewiesen, dass der Begriff "Messer" für derartige Mähmaschinen die Anordnung von mehreren Mähmesserklingen auf dem Mähmesserrücken bezeichnen kann. Bei anderen Maschinen werden einzelne Klingen auch als Messer bezeichnet.

Ein Häckselmesser für Strohhäcksler zeigt beispielsweise die EP 3 420 804 A1, wobei die Häckselmesser gezahnte Schneiden aufweisen. Mittels Befestigungsöffnungen und zugehörigen Befestigungselementen zur pendelnden Anbringung der Häckselmesser sind diese an einem Rotor befestigt. Derartige Strohhäcksler dienen beispielsweise zum Zerkleinern des Strohs eines Mähdreschers.

Die WO 2018/024854 A1 zeigt die Ausbildung eines Messers für Maisvorsätze, wie sie für Maiserntemaschinen eingesetzt werden.

Die US 5,823,449 zeigt Messer zum Einsatz in Futtermischwägen. Den Einsatz von Messern für ein Schneidwerk für Erntemaschinen, wie Ladewägen oder Ballenpressen, zeigt beispielsweise die DE 10 2013 007 302 A1.

Allen diesen beispielsweise genannten Klingen und Messern ist gemeinsam, dass sie jeweils an einem Klingenblatt zumindest ein oder zwei gezahnte Schneidkanten aufweisen, wobei die Schneidkanten gerade oder gebogen ausgebildet sind. Weiters weisen die Klingenblätter jeweils einen Befestigungsabschnitt auf, um die Messer zu fixieren oder an einer Bewegungsvorrichtung zu befestigen. Die Bewegung der Messeranordnungen erfolgt entweder linear oszillierend oder rotatorisch mit entweder einer Rotationsrichtung oder in beiden Rotationsrichtungen oszillierend oder auch bogenförmig. Ladewagen- und Ballenpressenmesser können auch feststehend angeordnet werden.

Allen diesen Messern ist gemeinsam, dass die Schneidkanten gezahnt sind, um eine höchstmögliche Schnittleistung zu gewährleisten. Es ist Stand der Technik, derartige Messerklingen möglichst verschleißarm auszubilden, um die Standfestigkeit zu erhöhen. Durch geeignete Maßnahmen kann an den Schneidkanten auch ein Selbstschärfeeffekt herbeigeführt werden, indem gehärtete Flächen mit etwas weicheren Metallflächen kombiniert werden, wie dies ebenfalls Stand der Technik ist.

In allen diesen Fällen sind gemäß Stand der Technik die Schneidkanten über ihre gesamte Länge einheitlich gezahnt, also mit gleicher Zahnteilung pro Längeneinheit (üblicherweise tpi = teeth per inch) und durchgehend gleicher Zahngeometrie.

Hinsichtlich der Zahnteilung ist zu verstehen, dass deren Wert mit zunehmender Feinheit der Zahnung zunimmt, wie auch der tpi-Wert zunimmt. Bei abnehmendem tpi-Wert und somit abnehmender Feinheit wird die Zahnteilung kleiner und die Zahnung gröber. Ein von der Zahnteilung verschiedener Begriff ist der Zahnabstand, der üblicherweise als Abstand von Zahnspitze zu Zahnspitze gemessen wird. Je grösser die Zahnteilung ist, desto kleiner ist der Zahnabstand.

Die Ausbildung der Messerklingen und deren Schneidkanten kann sehr vielfältig sein und wird dem jeweils zu bearbeitenden Schnittgut angepasst. Beispielsweise wird beim Mähen für Gräser und dünne Halme eine feine Zahnung der Schneidkanten bevorzugt, während für grobes stengeliges Schnittgut, wie z.B. Mais, eine grobe Zahnung der Schneidkanten notwendig ist. Die Ausbildung der Zahnung beeinflusst auch die Vorschubgeschwindigkeit beim Mähen.

In der Praxis bedeutet dies für den Maschinenbetreiber, dass er für verschiedene Feldfrüchte oder verschiedenes Schnittgut verschiedene Messer und Klingen zum Einsatz bringen muss. Dies bedeutet für den Maschinenbetreiber, aber auch für den Hersteller und Vertrieb einen erhöhten Aufwand für Herstellung, Montage, Vertrieb und Lagerhaltung.

Bekannt im Stand der Technik ist auch, die Schneidkanten mit zwei verschiedenen Zahnungen auszubilden, wobei beispielsweise ein Abschnitt der Schneidkante eine feinere Zahnung und der zweite Abschnitt der Schneidkante eine gröbere Zahnung aufweist. Dies ist jedoch mit Nachteilen verbunden. Beim Sprung von einer Zahnhöhe zur nächsten Zahnhöhe kann es zum Klemmen des Schnittgutes kommen. Sprunghafte Änderungen im Aufbau der Klinge erhöhen die Bruchgefahr. Weiters sind Klingen mit zwei oder mehr abschnittweise vorgesehenen Zahnhöhen, Zahnabständen oder Zahngeometrien nicht für jedes Mähgut universell verwendbar.

Es ist Aufgabe der vorliegenden Erfindung, für alle Messertypen wie sie beispielsweise eingangs genannt sind, eine Möglichkeit vorzusehen, das Schnittverhalten der Messer universeller zu gestalten, sodass verschiedene Schnittgüter damit bearbeitet werden können, ohne die Messer und Klingen wechseln zu müssen.

Die Erfindung ist dadurch gekennzeichnet, dass die Zahnung der Schneidkante über deren Länge hinsichtlich der Zahnteilung und/oder Zahngeometrie variiert ist.

Nach einem weiteren bevorzugten Merkmal ist die Zahnung stetig variiert.

Eine stetige Variation bedeutet, dass über die Länge oder über einen Abschnitt der Länge der Schneidkante die Zahnteilung von Zahn zu Zahn steigt oder abnimmt oder die Zahngeometrie von Zahn zu Zahn verändert ist.

Die Erfindung ist weiters durch die Merkmale der Patentansprüche, der Beschreibung und der Zeichnungen gekennzeichnet.

Nachfolgend wird die Erfindung beispielhaft anhand der Figuren näher beschrieben.
Figur 1 zeigt eine Mähmesserklinge in Schrägansicht.
Figur 2 zeigt ein Strohhäckslermesser in Schrägansicht.
Figur 3 zeigt ein Maisvorsatzmesser in Schrägansicht.
Figur 4 zeigt ein Futtermischwagenmesser in Schrägansicht.
Figur 5 und 6 zeigen ein Ladewagen- und Pressenmesser in verschiedenen Variationen.
Figur 7 veranschaulicht in Diagrammen verschiedene Variationsmöglichkeiten für die Zahnteilung der Schneidkanten der Messer.
Figur 8 zeigt ebenfalls schematisch mehrere Beispiele für Variationen der Zahngeometrie.

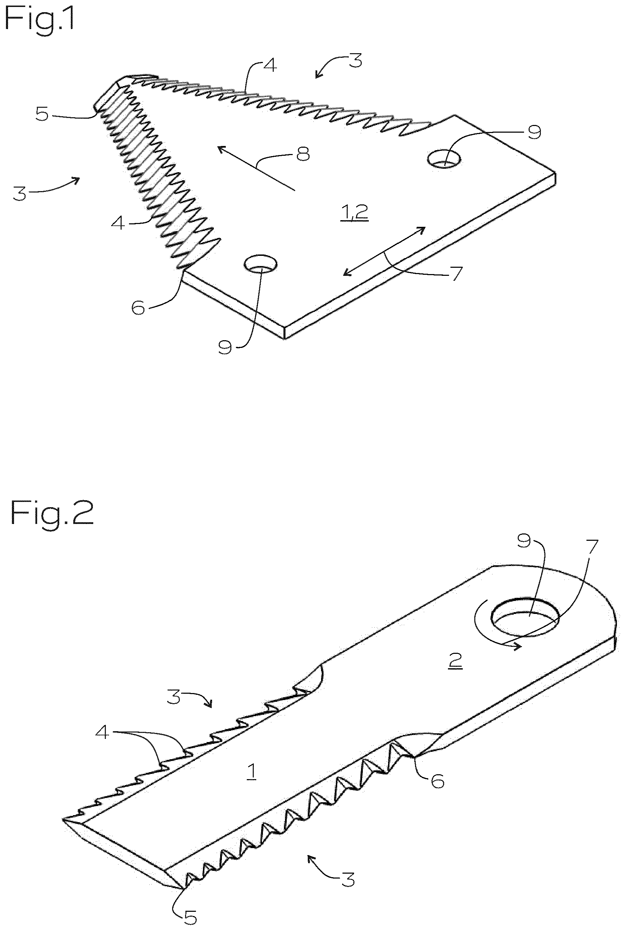

Die erfindungsgemäße Mähmesserklinge gemäß Figur 1 kann bei Fingerschneidwerken für Mähdrescher und für andere Mähmaschinen eingesetzt werden. Das Klingenblatt 1 umfasst einen Befestigungsabschnitt 2 mit Ausnehmungen 9, mit welchem die Mähmesserklinge z.B. auf einem Mähmesserrücken befestigt werden kann, beispielsweise mittels Schrauben oder Nieten. Die Mähmesserklinge weist weiters an den beiden spitz zulaufenden Kanten die Schneidkanten 3 auf. Die Schneidkanten 3 weisen eine Zahnung durch Einarbeiten von Zähnen 4 auf. Die Zahnung kann verfahrenstechnisch verschieden eingearbeitet werden, z.B. durch Prägen oder durch Fräsen. Die Schneidkanten 3 können gehärtet oder mit gehärteten Schichten versehen werden, wie dies dem Stand der Technik entspricht.

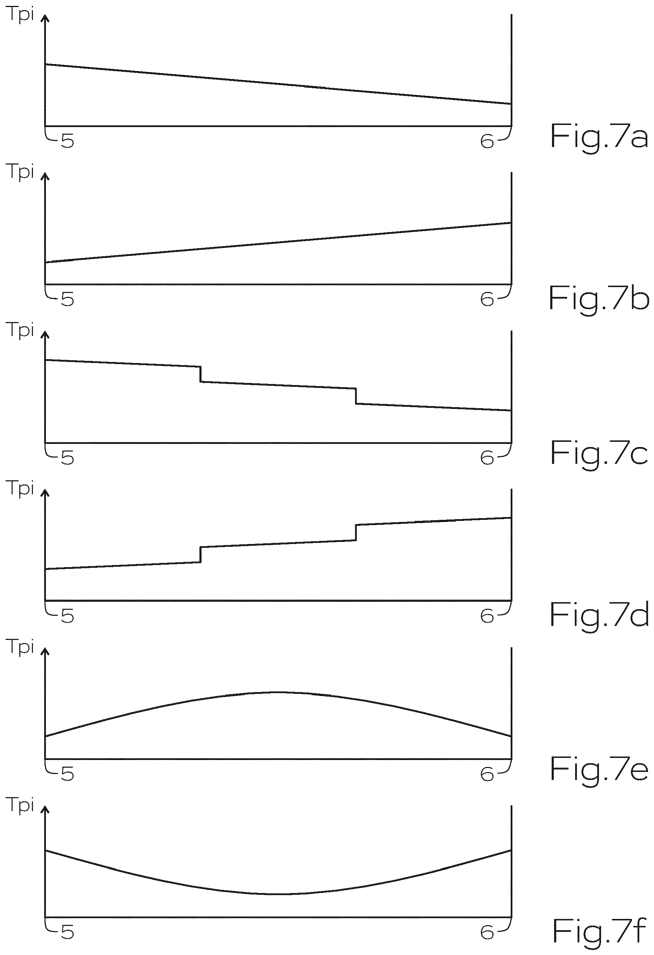

Erfindungsgemäß ist die Zahnung jeder Schneidkante 3 über deren Länge hinsichtlich der Zahnteilung variiert. Die Zahnteilung nimmt vom Schneidkantenanfang 5 bis zum Schneidkantenende 6 ab. Dies bedeutet, dass am Schneidkantenanfang 5 die Zahnteilung fein ist und bis zum Schneidkantenende 6 ansteigend gröber wird. Dies entspricht der Diagrammdarstellung Figur 7a. Wie international üblich sind in dem Diagramm tpi eingetragen, auf Englisch "teeth per inch". Je höher diese Zahl ist, umso feiner ist die Zahnung. Beispielsweise sind tpi-Werte von 14 bis 7 üblich, was einermZahnabstand von 1,8 bis 3,6 mm entspricht.

Die Variation über die gesamte Schneidkantenlänge bedeutet hinsichtlich der Zahnteilung, dass die Abstände zwischen den Zähnen immer verändert sind, das heißt dass an einer Schneidkante von Zahn zu Zahn verschiedene Abstände gegeben sind.

Durch diese Variation der Zahnung entlang der Schneidkantenlänge ergibt sich der erfindungsgemäß gewünschte Vorteil, dass unterschiedliches stengeliges Gut gemäht werden kann. Die Bewegungsrichtung der Mähmesserklinge ist mit 7 und die Vorschubrichtung der Mähmesserklinge durch das Schnittgut ist mit 8 eingezeichnet. Wenn Schnittgut eine feine Zahnung benötigt, kommt der feingeteilte Abschnitt der Mähmesserklinge zur Wirkung. Wenn hingegen grobstengeliges Schnittgut geschnitten werden soll, hilft der grobzahnige Abschnitt gegen das Schneidkantenende 6, um einen perfekten Schnitt durchzuführen oder zu vollenden.

In Figur 7 sind beispielsweise noch andere Variationsmöglichkeiten für die Zahnteilung dargestellt. Gemäß Figur 7b kann die Zahnteilung auch ansteigend sein, sodass der grobe Abschnitt am Schneidkantenanfang 5 liegt und dann sukzessive die Teilung zunimmt bis zum Schneidkantenende 6.

Gemäß den Figuren 7c und 7d können die Teilungen auch abschnittweise stetig variiert werden, z.B. im Schema Figur 7c mit abnehmender Feinheit und gemäß Figur 7d mit zunehmender Feinheit.

Gemäß der Variation Figur 7e kann die Zahnteilung auch von einem niederen Wert am Schneidkantenanfang 5 ansteigen und dann wieder abfallen und dem entgegengesetzt gemäß Figur 7f am Anfang eine höhere Feinheit aufweisen, die entlang der Schneidkante 3 abfällt und dann zum Schneidkantenende 6 wieder ansteigt.

Alle diese Variationsmöglichkeiten sind nur beispielsweise genannt und sollen darstellen, dass gemäß vorliegender Erfindung vorteilhaft eine Variation entlang der Schneidkanten 3 möglich ist.

Die Figur 2 zeigt ein Strohhäckslermesser, wie es beispielsweise bei Strohhäckslern für Mähdrescher eingesetzt werden kann. Diese Strohhäckslermesser sind am Befestigungsabschnitt 2 dreh- oder schwenkbar mit einer nicht dargestellten Aufhängung befestigt. Die Ausnehmung 9 dient zur Aufnahme eines Bolzens, um den das Messer in Bewegungsrichtung 7 geschwenkt werden kann.

Auch das dargestellte Strohhäckslermesser ist vom Schneidkantenanfang 5 bis zum Schneidkantenende 6 mit einer variierten Zahnung ausgestattet. Die dargestellte Zahnung entspricht der Variation Figur 7a. Im Rahmen der Erfindung können aber auch beispielsweise die anderen Zahnungen gemäß Figur 7b bis Figur 7f vorgesehen werden.

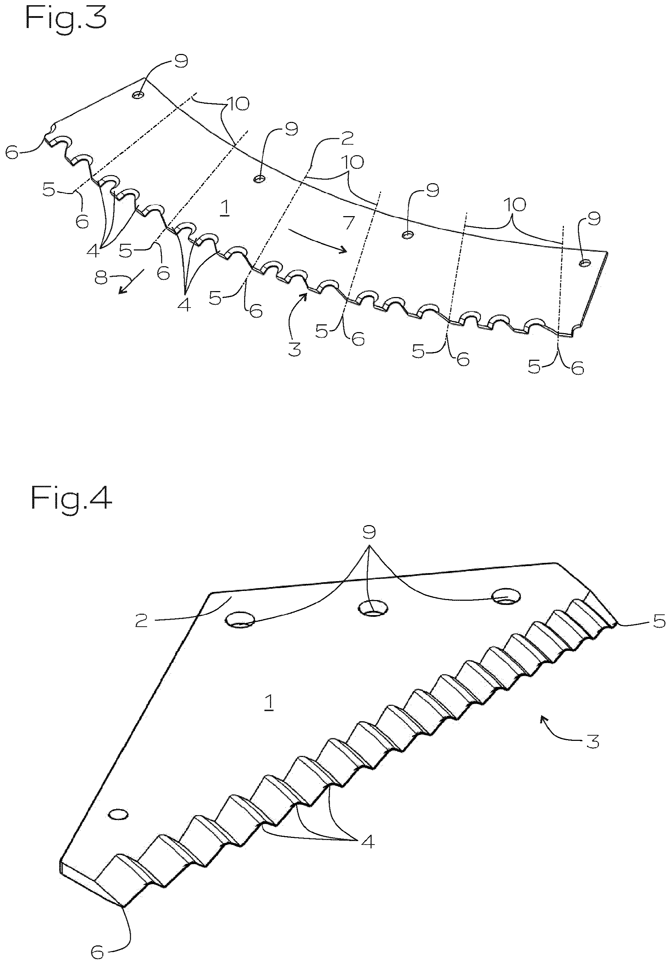

Die Figur 3 zeigt ein Maisvorsatzmesser, wie es beispielsweise bei reihenunabhängigen Maisvorsätzen (Mähvorsätzen) für selbstfahrende Feldhäcksler Verwendung finden kann. Dabei werden mehrere der dargestellten Messersegmente auf einer kreisförmigen Scheibe mit der Bewegungsrichtung 7 angeordnet. Anders als bei den vorher genannten und beschriebenen Messern liegen bei diesem Maisvorsatzmesser sich wiederholende Abschnitte 10 vor, die entlang der Schneidkante 3 angeordnet sind. Jeder Abschnitt 10 weist drei verschiedene Zahnteilungen auf, sodass auch bei diesem Maisvorsatzmesser der erfindungsgemäße Vorteil gegeben ist. Innerhalb der Abschnitte 10 kann beispielsweise eine andere Variation angeordnet werden, wie dies beispielsweise den Möglichkeiten Figur 7a bis 7f entspricht. Im Beispiel der Figur 3 sind sechs Abschnitte 10 mit je drei Zähnen 4 mit zunehmender Feinheit vorgesehen. Die Richtung des Vorschubes durch das Schnittgut ist auch hier mit 8 bezeichnet.

Die Figur 4 zeigt ein erfindungsgemäßes Futtermischwagenmesser, wobei die Zahnung der Schneidkante 3 stetig variiert wird, wie dies den Variationen gemäß Figur 7a oder Figur 7b entspricht. Es können auch hier die anderen Variationsmöglichkeiten gemäß Figur 7c bis Figur 7f angewendet werden. Die Variationen gemäß Figur 7c und 7d weisen sprunghafte Änderungen der Zahnung der Schneidkanten auf, wobei innerhalb jedes Abschnitts die Variation der Zahnung (tpi) stetig abnimmt oder zunimmt.

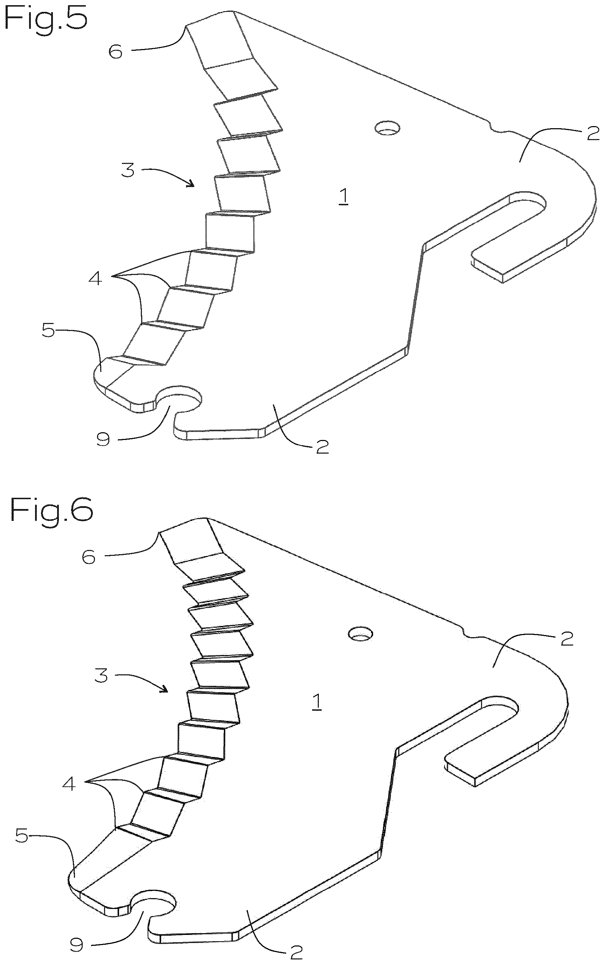

Die Figur 5 zeigt ein erfindungsgemäßes Ladewagen- und Pressenmesser. Anhand dieses Messertyps kann exemplarisch gezeigt werden, dass die Variation nicht nur durch die Variation der Zahnteilung vorgesehen werden kann, sondern durch die Variation der Zahngeometrie. Wie der Zeichnung zu entnehmen ist, ist jeweils der Zahnwinkel variiert, also der Schnittwinkel der Zahnbrust. Bei gleichbleibender Zahnteilung kann so erzielt werden, dass die einzelnen Zähne 4 ein unterschiedlich aggressives Schneidverhalten aufweisen. Diese Art der Variation ist auch bei allen anderen dargestellten und nicht dargestellten Schneidklingen möglich, wodurch ein sehr breites Anwendungsspektrum für das Messer gewährleistet ist.

Die Figur 6 zeigt ebenfalls ein Ladewagen- und Pressenmesser, dessen Zahnung der Schneidkante 3 sowohl bezüglich der Zahnteilung als auch bezüglich der Zahngeometrie variiert ist.

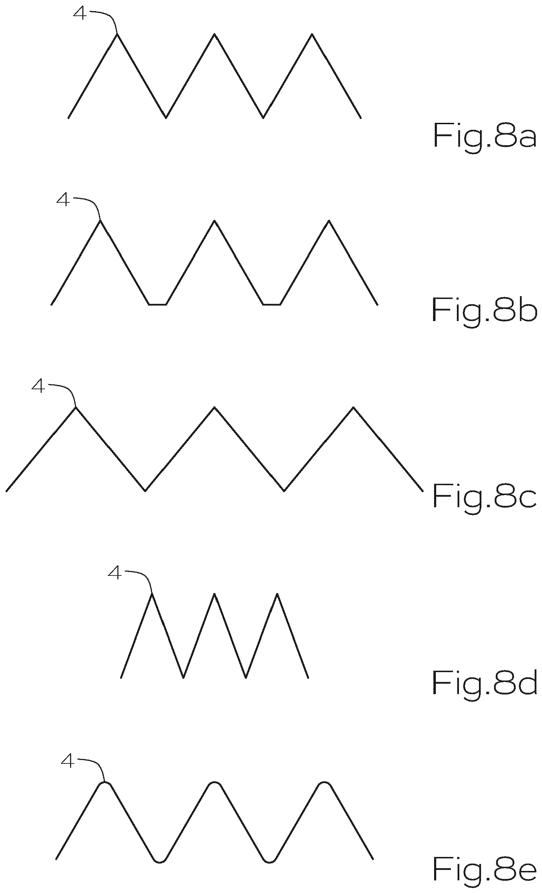

Exemplarisch sind einige der Variationsmöglichkeiten für die Zahngeometrie in Figur 8 dargestellt, die nicht einschränkend auszulegen ist. Die Variation in Figur 8a und Figur 8c ist über das Messer gemäß Figur 5 stetig verlaufend angeordnet. Die Variation ist sowohl hinsichtlich Zahnbreite, Zahnhöhe, Zahnwinkel und/oder Zahnspitzenschärfe (Figur 8e) möglich. Gemäß Figur 6 ist auch eine Kombination der Variationsmöglichkeiten durchführbar.

Es wird betont, dass die gezeichneten Variationen zu den einzelnen Messertypen nicht einschränkend auszulegen sind. Alle Variationen sind bei allen Messertypen möglich und können auch hinsichtlich der Variation der Zahnteilung und der Variation der Zahngeometrie beliebig vermischt werden.

### Bezugszeichenliste

- 1: Klingenblatt
- 2: Befestigungsabschnitt
- 3: Schneidkante
- 4: Zahn
- 5: Schneidkantenanfang
- 6: Schneidkantenende
- 7: Bewegungsrichtung
- 8: Vorschubrichtung
- 9: Ausnehmung
- 10: Abschnitt

## Patentansprüche

1. Messer und Klinge für landwirtschaftliche Maschinen, insbesondere Mähmesserklinge, Strohhäckslermesser, Maisvorsatzmesser, Futtermischwagenmesser, Ladewagen- und Pressenmesser, welches an einem Klingenblatt (1) zumindest eine von einem Schneidkantenanfang (5) bis zum Schneidkantenende (6) reichende gezahnte Schneidkante (3) aufweist, wobei die Schneidkante (3) gerade oder gebogen ausgebildet ist, und das Klingenblatt (1) einen Befestigungsabschnitt (2) aufweist, **dadurch gekennzeichnet, dass** die Zahnung der Schneidkante (3) über deren Länge hinsichtlich der Zahnteilung und/oder Zahngeometrie variiert ist.

2. Messer und Klinge nach Anspruch 1, **dadurch gekennzeichnet, dass** die Zahnung stetig variiert ist.

3. Messer und Klinge nach Anspruch 1 oder 2, **dadurch gekennzeichnet, dass** die Zahnteilung vom Schneidkantenanfang (5) zum Schneidkantenende (6) hin stetig abnehmend ausgebildet ist.

4. Messer und Klinge nach Anspruch 1 oder 2, **dadurch gekennzeichnet, dass** die Zahnteilung vom Schneidkantenanfang (5) zum Schneidkantenende (6) hin stetig zunehmend ausgebildet ist.

5. Messer und Klinge nach Anspruch 1 oder 2, **dadurch gekennzeichnet, dass** die Zahnteilung vom Schneidkantenanfang (5) stetig ansteigend und dann zum Schneidkantenende (6) wieder stetig abnehmend ist (Fig. 7e).

6. Messer und Klinge nach Anspruch 1 oder 2, **dadurch gekennzeichnet, dass** die Zahnteilung vom Schneidkantenanfang (5) vorerst stetig abnehmend und dann zum Schneidkantenende (6) wieder stetig zunehmend ist (Fig. 7f).

7. Messer und Klinge nach einem der Ansprüche 1 bis 6, **dadurch gekennzeichnet, dass** die Zahngeometrie hinsichtlich Zahnbreite, Zahnhöhe, Zahnwinkel und/oder der Zahnspitzenschärfe variiert ist.

8. Messer und Klinge nach einem der Ansprüche 1 bis 7, **dadurch gekennzeichnet, dass** die Schneidkante (3) zumindest drei Abschnitte (10) aufweist, die stetig gleich oder verschieden variiert sind.
